# EUROPEAN PATENT APPLICATION

(11) **EP 2 015 575 A1**
(43) Date of publication of application: **14.01.2009**
(21) Application number: 07290746.2
(22) Date of filing: 15.06.2007
(51) Int. Cl.: H04N 7/173, H04L 29/08, H04N 7/24

(54) **Device and method for providing an IPTV service**

(71) Applicant: Alcatel Lucent, 75008 Paris (FR)
(72) Inventor: Tsang, Ing-Jyh, 9250 Waasmunster (BE); Hemmeryckx-Deleersnijder, Bart, 9090 Melle (BE)
(74) Representative: Plas, Axel Ivo Michel

(57) **Abstract**

A scheduled channel device for an Internet Protocol Television (IPTV) system is provided, said scheduled channel device comprising means adapted to receive a video schedule which is programmed by a user and which identifies video items of at least one source available in said IPTV system that said user desires to view sequentially or according to a time scheme, characterized in that said scheduled channel device further comprises means adapted to control timely delivery of said video items by said at least one video source for streaming said video items over one dedicated channel towards said user. Further a method for providing such IPTV system is provided.

## Description

### Field of the Invention

The present invention generally relates to the field of Internet Protocol Television systems.

### Background of the Invention

Nowadays, Internet Protocol Television (IPTV) or digital TV is in direct competition with traditional analog cable TV. IPTV offers a wide variety of services, which create flexibility in program scheduling and interactivity, which analog cable TV is not able to offer. Such services are for example an Electronic Program Guide (EPG), Video on Demand (VoD), Time-Shifted TV (TSTV) and Pay-per-View (PPV).

EPG is an on-screen guide to select IPTV services such as VoD, TSTV, etc., and to select video items such as broadcast television programs, VoD items, etc. In other words, the EPG enables a viewer to navigate, select, and discover content by time, title, channel, genre, etc.

In "Optimal Network Architectures for On-Demand Services" (Ran Oz et al.), VoD is described. VoD is a service allowing users to select and watch video items stored for a long time period in a database, such as movies, concerts, sports games, popular episodes of a TV show, and clip content The requested VoD items are delivered over the IPTV system, typically in unicast mode.

In "Analysis Of Conditional Acces Models For PVRs", Ron Kats describes TSTV. TSTV is a service where the viewer is able to view a video from a broadcast TV channel at a later time than originally scheduled on the broadcast channel, while that program as originally scheduled mostly has not yet ended.

PPV is a service in which viewers can purchase video items to be seen on TV from a private TV channel and pay for the telecast of that event to their homes. The event is shown at the same time to everyone ordering it, as opposed to video on demand systems, which allow viewers to watch the video item at any time.

A general problem in current IPTV is that, for each video item a viewer desires to watch at a certain moment in time, the viewer has to instruct the system at that point in time to provide the video item from any of the video sources available in the IPTV system. Because an IPTV system typically multicasts one video channel at a time to a user, opposite to analog TV were all channels are broadcasted to the viewer and channel change implies tuning the channel frequency in the end-user's TV receiver, the IPTV system requires additional complexity in the network nodes and servers in order to efficiently change channels with an acceptable response time for the viewer.

A system that mitigates the above problem is a DVR (Digital Video Record) system, such as TiVo. A DVR system records broadcast channel video items scheduled by a user, and streams them when the user prefers. Here, efficient channel change and response time towards the user are easier to implement because the scheduled video items are recorded before the user views them. However, DVR systems require significant amounts of storage capacity in the network or in the home equipment. Providing the storage capacity in the network has an extra negative impact on the overall network performance since viewing a recorded video item involves unicasting the video item from the storage facility to the user. Moreover, DVR systems are per definition not able to stream live video items to the user.

Therefore, it is an objective of the present invention to disclose a device and method for use in an IPTV system enabling to stream video items from any IPTV video source available including broadcasting channels, with acceptable response time for the viewer and without the need for storage capacity in the network or in the home network.

### Summary of the Invention

As a first object of the present invention, a scheduled channel device for an Internet Protocol Television (IPTV) system is provided said scheduled channel device comprising means adapted to receive a video schedule which is programmed by a user and which identifies video items of at least one source available in said IPTV system that said user desires to view sequentially or according to a time scheme, characterized in that said scheduled channel device further comprises means adapted to control timely delivery of said video items by said at least one video source for streaming said video items over one dedicated channel towards said user.

The user consults at least one of the available video sources on the EPG and programmes his selection of video items sequentially or according to a time scheme in the schedule. The content of the schedule is then stored in the scheduled channel device. The scheduled channel device controls timely delivery of the video items by the corresponding video sources in order to stream the video at the moment in time defined by the schedule. The video streaming occurs via one dedicated channel. Controlling timely delivery may comprise requesting, receiving and streaming the video content, either giving instructions to IPTV clients and IPTV servers to do so.

The effect of controlling timely delivery of the video items by the at least one video source and streaming the scheduled video items towards the viewer via one dedicated channel is that no storage capacity is needed to store scheduled video items, because those video items are provided by their corresponding video source at the moment in time the viewer prefers, and moreover the viewer does not need to switch channels between two video items.

The video items scheduled optionally may comprise one or more of a Video on Demand (VoD) library item, a Pay Per View (PPV) channel item, a Recorded channel item, a Broadcast Television (BCTV) channel item, or a Time-Shifted Television (TSTV) service item. The viewer may schedule video items from any video source available via IPTV, including BCTV. Opposite to DVR for example, the viewer can select also live video items.

In an embodiment of the first object of the present invention, the scheduled channel device may be integrated in an IPTV client. The IPTV client is a functional unit in the IPTV system, which receives video content sent by an IPTV server, typically after issuing a request. Particularly, it may be a set-up box, but it may be a unit any where else in the network. In the context of this embodiment, the scheduled channel device requests or instructs the IPTV client to request video content in accordance with the stored schedule to the corresponding IPTV servers and controls streaming of the video items via one dedicated channel from the IPTV client to the user's TV receiver.

Preferably, when the scheduled video items comprise a Broadcast Television (BCTV) channel item, the scheduled channel device further comprises means adapted to request an IPTV server to send a signal to the IPTV client indicative for the start time of the Broadcast Television channel item.

In another embodiment of the first object of the present invention, the scheduled channel device may be integrated in an IPTV server. The IPTV server is a functional unit in the IPTV system, which sends video content to an IPTV client. Particularly, it may be a VoD library, a PPV channel server, a TSTV channel server, a Recorded Channel server, or a broadcast TV channel server, but it may also be a unit any where else in the network delivering and possibly storing video items or video item fragments. In the context of this embodiment, the scheduled channel device instructs the IPTV server to send video content in accordance with the stored schedule. The latter IPTV server controls streaming via one dedicated channel to the IPTV client

Preferably, if the scheduled channel device is integrated in an IPTV server, the IPTV server is adapted to unicast the video items to the IPIV client.

In another embodiment of the first object of the present invention, the scheduled channel device may be integrated in a network node and may further be adapted to interact with an IPTV client and an IPTV server. In the context of the present invention, a network node may be a functional unit in the IPTV system, which passes packages of video content without being aware of the content In this case, the scheduled channel device implemented in such network node may instruct the IPTV client for requesting the video items or the IPTV server for sending the video items according to the schedule. In the context of the present invention, a network node may also be a functional unit in the IPTV system which functions both as client and server, i.e. requests and sends video content In the context of this embodiment, the scheduled channel device implemented in such network node may request or instruct the network node to request video content to corresponding IPTV servers, or send or instruct the network node to send video content via one dedicated channel to the IPTV client.

As a second object of the present invention, a method for providing an Internet Protocol Television (IPTV) service is proposed, comprising the step of programming a video schedule which identifies video items of at least one video source available in an IPTV system that a user desires to view sequentially or according to a time scheme, characterized in that said method further comprises the steps of:
- receiving and temporarily storing said video schedule,
- controlling timely delivery of said video items by said at least one video source, and
- streaming said video items over one dedicated channel towards said user.

In an embodiment of the second object of the present invention, the method for providing an IPTV service may further comprise the step of securing the dedicated channel, thereby allowing only a selection of video sources and/or video items to said dedicated channel.

In another embodiment of the second object of the present invention, the method for providing an IPTV service may further comprise the step of maintaining and regularly updating a user profile of said user based on said video schedule.

### Brief Description of the Drawings

Fig. 1 illustrates a first embodiment of the first and second object of the invention.
Fig. 2 illustrates a more specific first embodiment of the first and second object of the invention.
Fig. 3 illustrates a second embodiment of the first and second object of the invention.
Fig.4 illustrates a third embodiment of the first and second object of the invention.

### Detailed Description of Embodiment(s)

Below, several embodiments of the first and second object of the present invention are described and explained with references to the figures. The references used are identical when indicating identical steps.

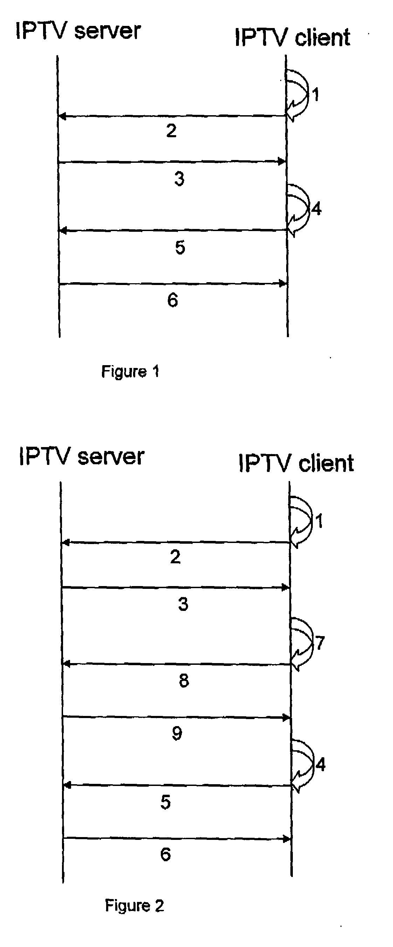

In a first embodiment of the first and second object of the present invention, the scheduled channel device may be integrated in an IPTV client. In figure 1, a schematic representation of this embodiment if shown.

First, the user programmes a schedule with his selection of video items sequentially or according to a time scheme at the IPTV client site, typically the set-up box. The scheduled channel device, which is integrated in the IPTV client stores this schedule and requests or instructs (1) the IPTV client to request video item A (2) according to the schedule to the corresponding IPTV server in order to obtain timely delivery of video item A to the IPTV client The corresponding IPTV server streams video item A to the IPTV client (3). The scheduled channel device then controls and monitors streaming of video item A via one dedicated channel from the IPTV client to the user's TV receiver.

The scheduled channel device monitors when to change from video item A to video item B according to the stored schedule. It requests or instructs (4) the IPTV client to request video item B (5) according to the schedule to the corresponding IPTV server in order to obtain timely delivery of video item B to the IPTV client. The corresponding IPTV server streams video item B to the IPTV client (6). The scheduled channel device then controls and monitors streaming of video item B after video item A via the same dedicated channel from the IPTV client to the user's TV receiver,

in case the user desires to watch video item A till the end, and video item B is available as VoD or a TSTV channel item, meaning available at any moment in time after video item A ended, the schedule channel device controls the change from video item A to video item B when video item A ended or later in accordance with the schedule.

Figure 2 illustrates the case where video item B is a Broadcast Television channel item overlapping with video item A and the user prefers to watch video item B from the beginning. The scheduled channel device requests or instructs the IPTV client (4) to request (5) the corresponding BCTV channel server to send (9) a signal to the IPTV client indicative for the start time of video item B. Upon receipt of that signal, the schedule channel device will request or instruct the IPTV client to request the corresponding BCTV channel before video item A ended.

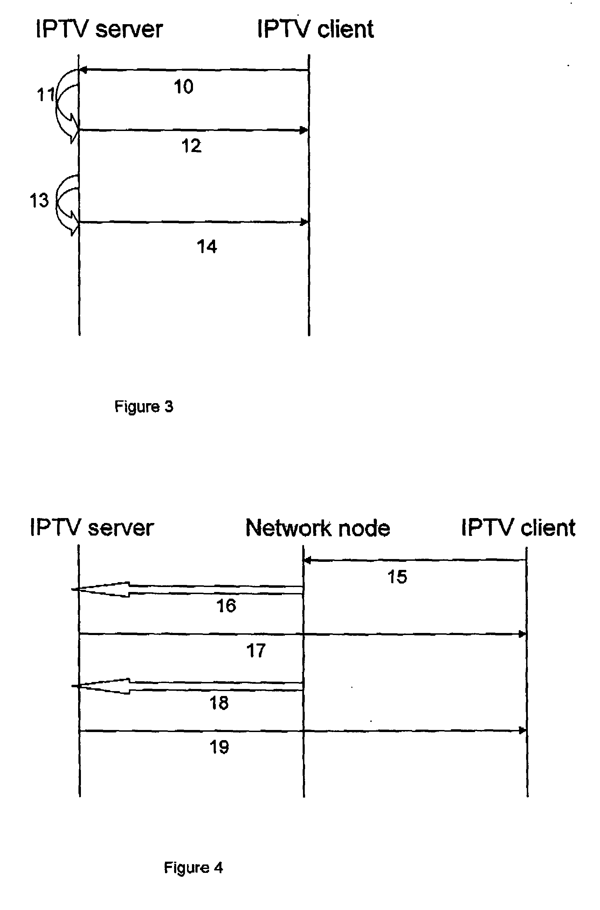

In a second embodiment of the first and second object of the present invention, the scheduled channel device may be integrated in an IPTV server. In figure 3, a schematic representation of this embodiment if shown.

First, the user programmes a schedule with his selection of video items sequentially or according to a time scheme at the IPTV client site, typically the set-up box. The IPTV client sends (10) the schedule to the scheduled channel device, which is integrated in the IPTV server. In the context of this embodiment, IPTV server means the whole infrastructure of IPTV servers, meaning the scheduled channel device is integrated somewhere at IPTV server site. The scheduled channel device then instructs (11) the IPTV server to send (12) video item A to the IPTV client via one dedicated channel. The scheduled channel device then controls and monitors the change from video item A to video item B by instructing (13) the IPTV server to stream (14) video item B to the IPTV client via the same dedicated channel.

If video items A and B are available on a particular server or on servers more upstream with respect to this particular server, the scheduled channel device monitors easily the change from video item A to video item B by instructing only this particular server in order to obtain timely delivery of the scheduled video items via the same channel to the IPTV client.

In case video item A and B are not available on one particular server or on servers more upstream with respect this particular server, they have to be streamed by different servers on the same dedicated channel. The scheduled channel device then has to instruct both IPTV servers to send video item A and B via one dedicated channel in accordance with the schedule. In this case, the scheduled channel device may be part of a so-called Scheduled Channel Subsystem, meaning the scheduled channel device is integrated at IPTV server site such that it is able to instruct the server corresponding to video item A and the server corresponding to video item B and to control and monitor timely delivery of both video items to the IPTV client via the same dedicated channel. Besides the scheduled channel device, the Scheduled Channel Subsystem may further comprise a network node to which the server corresponding to video item A and the server corresponding to video item B stream the respective video items, and which is instructed by the scheduled channel device to stream the video items via one dedicated channel to the IPTV client.

Preferably, if the scheduled channel device is integrated in an IPTV server, the IPTV server is adapted to unicast the video items to the IPTV client

In a third embodiment of the first and second object of the present invention, the scheduled channel device may be integrated in a network node and may further be adapted to interact with an IPTV client and an IPTV server. In figure 4, a schematic representation of this embodiment if shown.

First, the user programmes a schedule with his selection of video items sequentially or according to a time scheme at the IPTV client site, typically the set-up box. The IPTV client (15) sends the schedule to the scheduled channel device, which is integrated in a network node between the IPTV client and the IPTV server. The scheduled channel device implemented in such network node instructs the IPTV client for requesting the video item A to the corresponding IPTV server. The IPTV server streams then video item A to the IPTV client via a dedicated channel. The scheduled channel device may also directly instruct the IPTV server (16) for streaming video item A (17) to the IPTV client via a dedicated channel. The scheduled channel device controls and monitors the timely delivery of video item A and when to change from video item A to video item B according to the stored schedule. It instructs the IPTV client to request video item B according to the schedule to the corresponding IPTV server or directly instructs the corresponding IPTV server (18) to stream video item B (19) to the IPTV client via the same channel.

As an alternative to this embodiment, a second network node may be used to which the server corresponding to video item A and the server corresponding to video item B stream the respective video items, and which is instructed by the scheduled channel device to stream the video items via one dedicated channel to the IPTV client.

As another alternative to this embodiment, the network node wherein the scheduled channel device is integrated itself may function as an IPTV server and client In that case, the scheduled channel device may instruct this network node to request video items to the corresponding servers and to stream them upon receipt via one dedicated channel.

In a fourth embodiment of the first and second object of the present invention, the one dedicated channel via which the scheduled items are all streamed to the user may be secured, thereby allowing only a selection of video sources and/or video items to this channel. Therefore, in the scheduled channel device, a selection of IPTV servers may be locked by a user password, a user pin code, etc. allowing only video items available at this selection of servers to be programmed in the schedule. Also a selection of video times may be locked allowing only these video items to be programmed in the schedule. As an alternative, servers or video items not allowed to be scheduled may be locked. In this way, parents for example may control which video items their children are able to watch.

In a fifth embodiment of the first and second object of the present invention, a user profile may be maintained and regularly updated based on the schedule of video items the user programmed. Therefore, the scheduled channel device, the IPTV client, the IPTV server or any other network node in the IPTV system may comprise means to store data about which video items a dedicated user scheduled and when they are scheduled, which video items are requested or streamed and when, which IPTV serves are requested to stream video items and when, etc. This information could be used to provide the user or the IPTV system provider with information concerning the user's watch behaviour and watch time. It could be used for suggesting the user video items which, according to the user's profile, are probably interesting to the user.

It is understood by a person skilled in the art that the IPTV server and the IPTV client may be any network node in the network respectively able to store and stream video items or parts of video items or able to request video items or parts of video items. It is also understood by a person skilled in the art that an IPTV client may also function as IPTV server when streaming video items it requested and received from another server. Accordingly, an IPTV server may also function as IPTV client when requesting and receiving video items in order to stream them.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application, It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A scheduled channel device for an Internet Protocol Television (IPTV) system, said scheduled channel device comprising means adapted to receive a video schedule which is programmed by a user and which identifies video items of at least one source available in said IPTV system that said user desires to view sequentially or according to a time scheme, **CHARACTERIZED IN THAT** said scheduled channel device further comprises means adapted to control timely delivery of said video items by said at least one video source for streaming said video items over one dedicated channel towards said user.

2. A scheduled channel device for an IPTV system according to claim 1, wherein said video items comprise one or more of.
- a Video on Demand (VoD) library item,
- a Pay Per View (PPV) channel item,
- a Recorded channel item,
- a Broadcast Television (BCTV) channel item.
- a Time-Shifted Television (TSTV) service item.

3. A scheduled channel device for an IPTV system according to claim 1, said scheduled channel device being integrated in an IPTV client.

4. A scheduled channel device for an IPTV system according to claim 3, wherein said video items comprise a Broadcast Television (BCTV) channel item, and
wherein said scheduled channel device further comprises means adapted to request an IPTV server to send a signal to said IPTV client indicative for the start time of said Broadcast Television channel item.

5. A scheduled channel device for an IPTV system according to claim 1, said scheduled channel device being integrated in an IPTV server.

6. A scheduled channel device for an IPTV system according to claim 5, wherein said IPTV server is adapted to unicast said video items to an IPTV client

7. A scheduled channel device for an IPTV system according to claim 1, said scheduled channel device being integrated in a network node, said scheduled channel device further being adapted to interact with an IPTV client and an IPTV server.

8. A method for providing an Internet Protocol Television (IPTV) service, comprising the step of programming a video schedule which identifies video items of at least one video source available in an IPTV system that a user desires to view sequentially or according to a time scheme, **CHARACTERIZED IN THAT** said method further comprises the steps of: receiving and temporarily storing said video schedule, controlling timely delivery of said video items by said at least one video source, and
streaming said video items over one dedicated channel towards said user.

9. A method for providing an IPTV service according to claim 8, further comprising the step of securing said dedicated channel, thereby allowing only a selection of video sources and/or video items to said dedicated channel.

10. A method for providing an IPTV service according to claim 8, further comprising the step of maintaining and regularly updating a user profile of said user based on said video schedule.
